# EUROPEAN PATENT APPLICATION

(11) **EP 3 720 079 A1**
(43) Date of publication of application: **07.10.2020**
(21) Application number: 18899550.0
(22) Date of filing: 27.12.2018
(51) Int. Cl.: H04L 29/06

(54) **METHOD AND APPARATUS FOR SENDING MESSAGE**

(30) Priority: 15.01.2018 CN 201810036963
(71) Applicant: HUAWEI TECHNOLOGIES CO., LTD., Shenzhen, Guangdong 518129 (CN)
(72) Inventor: ZHU, Haoren, Shenzhen, Guangdong 518129 (CN); ZHU, Hualin, Shenzhen, Guangdong 518129 (CN); LI, He, Shenzhen, Guangdong 518129 (CN)
(74) Representative: Maiwald Patent- und Rechtsanwaltsgesellschaft mbH
(86) International application number: PCT/CN2018/124490
(87) International publication number: WO 2019/137232

(57) **Abstract**

Embodiments of this application provide a message sending method and apparatus. A security gateway sends a request message to a terminal device; and the terminal device obtains a security context between the terminal device and the security gateway based on a security parameter of the security gateway and a security parameter of the terminal device, and protects a sent message by using the security context, to improve security of the sent message.

## Description

This application claims priority to Chinese Patent Application No. 201810036963.5, filed with the Chinese Patent Office on January 15, 2018 and entitled "MESSAGE SENDING METHOD AND APPARATUS", which is incorporated herein by reference in its entirety.

### TECHNICAL FIELD

This application relates to the field of communications technologies, and in particular, to a message sending method and apparatus.

### BACKGROUND

For an untrusted (Untrusted) non-3rd generation partnership project (3rd generation partnership project, 3GPP) access network scenario, in a 4G network architecture, a terminal device performs access authentication before sending a message, the terminal device accesses an access network through a wireless local area network (Wireless Local Area Networks, WLAN) in the access authentication process, and the WLAN initiates an authentication request to an authentication, authorization, and accounting server (Authentication, Authorization, Accounting Server, AAA Server) through an SWa interface, so that the terminal device obtains an internet protocol (Internet Protocol, IP) address of the terminal device, and then performs tunnel authentication by using the IP address, to ensure secure transmission of the message.

In a 5G network architecture, access authentication and tunnel authentication are combined. That is, both access authentication and tunnel authentication are performed. Before combined authentication is completed, security of a message sent between a terminal device and a security gateway cannot be ensured.

### SUMMARY

This application provides a message sending method and apparatus, to resolve a prior-art problem that security of a sent message is not high.

A first aspect of this application provides a message sending method, including: receiving, by a terminal device, a request message sent by a security gateway, where the request message includes a security parameter of the security gateway; and after obtaining the security parameter of the security gateway, protecting, by the terminal device, a sent message based on the security parameter of the security gateway and a security parameter of the terminal device by using the security context, to improve security of the sent message.

Optionally, the request message further includes a start flag bit.

Optionally, the request message further includes a security flag bit.

Optionally, the security flag bit is included in a header or a payload of the request message.

Optionally, that the terminal device obtains the security context between the terminal device and the security gateway based on the security parameter of the security gateway and the security parameter of the terminal device includes:
generating, by the terminal device, a first key based on the security parameter of the security gateway and the security parameter of the terminal device; and generating first integrity message authentication information based on the first key.

Optionally, the method further includes:
sending, by the terminal device, the security parameter of the terminal device and the first integrity message authentication information to the security gateway.

Optionally, the method further includes:
receiving, by the terminal device, second integrity message authentication information sent by the security gateway; and
verifying, by the terminal device, the second integrity authentication information based on the first key.

Optionally, the receiving, by the terminal device, second integrity message authentication information sent by the security gateway includes:
receiving, by the terminal device, a response message sent by the security gateway, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the protecting, by the terminal device, a sent message by using the security context includes:
encrypting, by the terminal device by using the first key, the message sent to the security gateway; and
performing, by the terminal device by using the first integrity message authentication information, integrity protection on the message sent to the security gateway.

A second aspect of this application provides a message sending method, including:
sending, by a security gateway, a request message to a terminal device, where the request message includes a security parameter of the security gateway, and after obtaining the security parameter of the security gateway, obtaining, by the terminal device, a security context between the terminal device and the security gateway based on the security parameter of the security gateway and a security parameter of the terminal device; and protecting, by using the security context, a message sent to the security gateway, to improve security of the sent message.

Optionally, the request message further includes a start flag bit.

Optionally, the request message further includes a security flag bit.

Optionally, the security flag bit is included in a header or a payload of the request message.

Optionally, the security context includes a first key and first integrity message authentication information.

The method further includes:
receiving, by the security gateway, the security parameter of the terminal device and the first integrity message authentication information that are sent by the terminal device;
generating, by the security gateway, a second key based on the security parameter of the terminal device and the security parameter of the security gateway; and
verifying, by the security gateway, the first integrity message authentication information based on the second key.

Optionally, the method further includes:
sending, by the security gateway, second integrity message authentication information to the terminal device.

Optionally, the sending, by the security gateway, second integrity message authentication information to the terminal device includes:
sending, by the security gateway, a response message to the terminal device, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the method further includes:
encrypting, by the security gateway by using the second key, a message sent to the terminal device; and
performing, by the security gateway by using the second integrity message authentication information, integrity protection on the message sent to the terminal device.

A third aspect of this application provides a message sending method, including:
receiving, by a security gateway, a first message sent by a terminal device, where the first message includes an identity of the terminal device and a security parameter of the terminal device; obtaining a security context between the terminal device and the security gateway based on the security parameter of the terminal device and a security parameter of the security gateway; and protecting, by using the security context, a message sent to the terminal device, to improve security of the sent message.

Optionally, the obtaining, by the security gateway, a security context between the terminal device and the security gateway based on the security parameter of the terminal device and a security parameter of the security gateway includes:
generating, by the security gateway, a first key based on the security parameter of the terminal device and the security parameter of the security gateway; and generating first integrity message authentication information based on the first key.

Optionally, the method further includes:
sending, by the security gateway, the security parameter of the security gateway and the first integrity message authentication information to the terminal device.

Optionally, the method further includes:
receiving, by the security gateway, second integrity message authentication information sent by the terminal device; and
verifying, by the security gateway, the second integrity message authentication information based on the first key.

Optionally, the protecting, by the security gateway, a sent message by using the security context includes:
encrypting, by the security gateway by using the first key, the message sent to the terminal device; and
performing, by the security gateway by using the first integrity message authentication information, integrity protection on the message sent to the terminal device.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

A fourth aspect of this application provides a message sending method, including:
sending, by a terminal device, a first message to a security gateway, where the first message includes an identity of the terminal device and a security parameter of the terminal device, and the security parameter is used by the security gateway to obtain a security context between the terminal device and the security gateway; and receiving a message sent by the security gateway, where the message is protected by using the security context between the terminal device and the security gateway, to improve security of the sent message.

Optionally, the security context includes a first key and first integrity message authentication information.

Before the receiving, by the terminal device, a message sent by the security gateway, the method further includes:
receiving, by the terminal device, a security parameter of the security gateway and the first integrity message authentication information that are sent by the security gateway;
generating, by the terminal device, a second key based on the security parameter of the terminal device and the security parameter of the security gateway; and
verifying, by the terminal device, the first integrity message based on the second key.

Optionally, the method further includes:
sending, by the terminal device, second integrity message authentication information to the security gateway.

Optionally, the method further includes:
encrypting, by the terminal device by using the second key, the message sent to the network device; and
performing, by the terminal device by using the second integrity message authentication information, integrity protection on the message sent to the network device.

Optionally, the security parameter includes a parameter required to generate the security context.

Optionally, the negotiated algorithm includes one or both of an integrity algorithm and an encryption algorithm.

A fifth aspect of this application provides a message sending apparatus, including:
a receiving module, configured to receive a request message sent by a security gateway, where the request message includes a security parameter of the security gateway;
a processing module, configured to obtain a security context between the message sending apparatus and the security gateway based on the security parameter of the security gateway and a security parameter of the message sending apparatus; and
a sending module, configured to protect a sent message by using the security context and the first integrity message authentication information.

Optionally, the request message further includes a start flag bit.

Optionally, the request message further includes a security flag bit.

Optionally, the security flag bit is included in a header or a payload of the request message.

Optionally, the processing module is specifically configured to: generate a first key based on the security parameter of the security gateway and the security parameter of the message sending apparatus; and generate the first integrity message authentication information based on the first key.

Optionally, the sending module is further configured to send the security parameter of the message sending apparatus and the first integrity message authentication information to the security gateway.

Optionally, the receiving module is further configured to receive second integrity message authentication information sent by the security gateway.

The processing module is further configured to verify the second integrity authentication information based on the first key.

Optionally, the receiving module is specifically configured to receive a response message sent by the security gateway, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the sending module is specifically configured to: encrypt, by using the first key, the message sent to the security gateway; and perform, by using the first integrity message authentication information, integrity protection on the message sent to the security gateway.

A sixth aspect of this application provides a message sending apparatus, including:
a sending module, configured to send a request message to a terminal device, where the request message includes a security parameter of the message sending apparatus, and the security parameter of the message sending apparatus is used by the terminal device to obtain a security context between the terminal device and the message sending apparatus; and
a receiving module, configured to receive a message sent by the terminal device, where the message is protected by using the security context between the terminal device and the message sending apparatus.

Optionally, the request message further includes a start flag bit.

Optionally, the request message further includes a security flag bit.

Optionally, the security flag bit is included in a header or a payload of the request message.

Optionally, the security context includes a first key and first integrity message authentication information.

The receiving module is further configured to receive a security parameter of the terminal device and the first integrity message authentication information that are sent by the terminal device.

The apparatus further includes a processing module.

The processing module is configured to: generate a second key based on the security parameter of the terminal device and the security parameter of the message sending apparatus; and verify the first integrity message authentication information based on the second key.

Optionally, the sending module is further configured to send second integrity message authentication information to the terminal device.

Optionally, the sending module is further configured to send a response message to the terminal device, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the sending module is specifically configured to: encrypt, by using the first key, a message sent to the terminal device; and perform, by using the second integrity message authentication information, integrity protection on the message sent to the terminal device.

A seventh aspect of this application provides a message sending apparatus, including:
a receiving module, configured to receive a first message sent by a terminal device, where the first message includes an identity of the terminal device and a security parameter of the terminal device;
a processing module, configured to obtain a security context between the terminal device and the message sending apparatus based on the security parameter of the terminal device and a security parameter of the message sending apparatus; and
a sending module, configured to protect, by using the security context, a message sent to the terminal device.

Optionally, the processing module is specifically configured to: generate a first key based on the security parameter of the terminal device and the security parameter of the message sending apparatus; and generate first integrity message authentication information based on the first key.

Optionally, the sending module is further configured to send the security parameter of the message sending apparatus and the first integrity message authentication information to the terminal device.

Optionally, the receiving module is further configured to receive second integrity message authentication information sent by the terminal device.

The processing module is further configured to verify the second integrity message authentication information based on the first key.

Optionally, the sending module is specifically configured to: encrypt, by using the security context, the message sent to the terminal device; and perform, by using the first integrity message authentication information, integrity protection on the message sent to the terminal device.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

An eighth aspect of this application provides a message sending apparatus, including:
a sending module, configured to send a first message to a security gateway, where the first message includes an identity of the message sending apparatus and a security parameter of the message sending apparatus, and the security parameter is used by the security gateway to obtain a security context between the message sending apparatus and the security gateway; and
a receiving module, configured to receive a message sent by the security gateway, where the message is protected by using the security context between the message sending apparatus and the security gateway.

Optionally, the security context includes a first key and first integrity message authentication information.

The receiving module is further configured to receive a security parameter of the security gateway and the first integrity message authentication information that are sent by the security gateway.

The apparatus further includes:
a processing module, configured to: generate a second key based on the security parameter of the message sending apparatus and the security parameter of the security gateway; and verify the first integrity message based on the second key.

Optionally, the sending module is further configured to send second integrity message authentication information to the security gateway.

Optionally, the sending module is further configured to: encrypt, by using the security context, the message sent to the network device; and perform, by using the second integrity message authentication information, integrity protection on the message sent to the network device.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

A ninth aspect of this application provides a message sending apparatus, including:
a processor, a memory, and a transceiver, where the memory is configured to store an instruction, the transceiver is configured to communicate with another device, and the processor is configured to execute the instruction stored in the memory, so that the message sending apparatus performs the method according to the first aspect.

A tenth aspect of this application provides a message sending apparatus, including:
a processor, a memory, and a transceiver, where the memory is configured to store an instruction, the transceiver is configured to communicate with another device, and the processor is configured to execute the instruction stored in the memory, so that the message sending apparatus performs the method according to the second aspect.

An eleventh aspect of this application provides a message sending apparatus, including:
a processor, a memory, and a transceiver, where the memory is configured to store an instruction, the transceiver is configured to communicate with another device, and the processor is configured to execute the instruction stored in the memory, so that the message sending apparatus performs the method according to the third aspect.

Atwelfth aspect of this application provides a message sending apparatus, including:
a processor, a memory, and a transceiver, where the memory is configured to store an instruction, the transceiver is configured to communicate with another device, and the processor is configured to execute the instruction stored in the memory, so that the message sending apparatus performs the method according to the fourth aspect.

Athirteenth aspect of this application provides a computer readable storage medium. The computer readable storage medium stores an instruction, and when the instruction is executed by a computing apparatus, a message sending apparatus is enabled to perform the method according to the first aspect.

A fourteenth aspect of this application provides a computer readable storage medium. The computer readable storage medium stores an instruction, and when the instruction is executed by a computing apparatus, a message sending apparatus is enabled to perform the method according to the second aspect.

A fifteenth aspect of this application provides a computer readable storage medium. The computer readable storage medium stores an instruction, and when the instruction is executed by a computing apparatus, a message sending apparatus is enabled to perform the method according to the third aspect.

A sixteenth aspect of this application provides a computer readable storage medium. The computer readable storage medium stores an instruction, and when the instruction is executed by a computing apparatus, a message sending apparatus is enabled to perform the method according to the fourth aspect.

A seventeenth aspect of this application provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method according to the first aspect.

An eighteenth aspect of this application provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method according to the second aspect.

A nineteenth aspect of this application provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method according to the third aspect.

A twentieth aspect of this application provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method according to the fourth aspect.

### BRIEF DESCRIPTION OF DRAWINGS

FIG. 1 is a schematic diagram of a 5G network architecture according to this application;
FIG. 2 is a schematic flowchart of a message sending method according to this application;
FIG. 3a to FIG. 3c are schematic diagrams of a packet structure of a request message according to this application;
FIG. 4 is a schematic flowchart of another message sending method according to this application;
FIG. 5 is a schematic structural diagram of a message sending apparatus according to this application;
FIG. 6 is a schematic structural diagram of another message sending apparatus according to this application;
FIG. 7 is a schematic structural diagram of still another message sending apparatus according to this application;
FIG. 8 is a schematic structural diagram of yet another message sending apparatus according to this application;
FIG. 9 is a schematic structural diagram of yet another message sending apparatus according to this application;
FIG. 10 is a schematic structural diagram of yet another message sending apparatus according to this application;
FIG. 11 is a schematic structural diagram of yet another message sending apparatus according to this application; and
FIG. 12 is a schematic structural diagram of yet another message sending apparatus according to this application.

### DESCRIPTION OF EMBODIMENTS

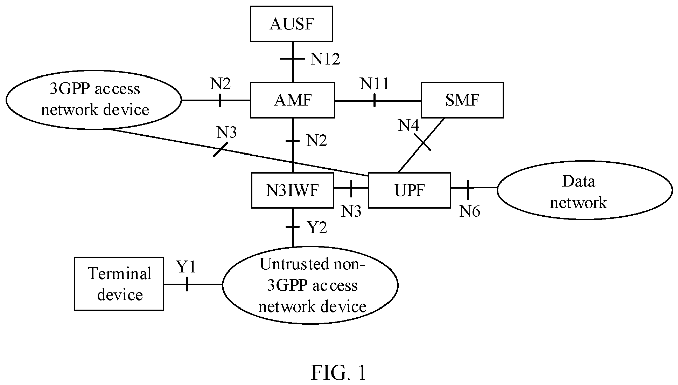

This application may be applied to a 5G network architecture and a network architecture with a similar function after 5G. This application is described by using a network architecture applied to 5G as an example. FIG. 1 is a schematic diagram of a 5G network architecture according to this application. As shown in FIG. 1, the network architecture in this embodiment includes a terminal device, an untrusted non-3GPP access network (untrusted non-3GPP access network) device, a security gateway (security gateway) (which is shown by using an N3IWF as an example in FIG. 1), an access and mobility management function (Access and Mobility Management Function, AMF) network element, an authentication server function (Authentication Server Function, AUSF) network element, a 3GPP access network device, a session management function (session management function, SMF) network element, a user plane function (user plane function, UPF) network element, a data network device, and the like.

Untrusted non-3GPP access network device: This network element allows interconnection and interworking between the terminal device and a 3GPP core network by using a non-3GPP technology. For example, the non-3GPP technology includes wireless fidelity (Wireless Fidelity, Wi-Fi), worldwide interoperability for microwave access (Worldwide Interoperability for Microwave Access, WiMAX), and a code division multiple access (Code Division Multiple Access, CDMA) network. Different from a trusted non-3GPP access network device that may directly access the 3GPP core network, this network element requires a security tunnel established by the security gateway to be interconnected and interworked with the 3GPP core network. For example, the security gateway is an evolved packet data gateway (Evolved Packet Data Gateway, eDPG) or a non-3GPP interworking function (Non-3GPP InterWorking Function, N3IWF) network element.

Security gateway: This network element establishes a security tunnel with the terminal device, so that the terminal device can securely communicate with a 3GPP core network. The network element is an intermediate network element for communication between the terminal device and the 3GPP core network.

AUSF network element: The AUSF network element mainly provides an authentication function.

Terminal device: The terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and the access network device communicate with each other by using an air interface technology.

3GPP access network (radio access network, RAN) device: The 3GPP access network device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. In systems using different radio access technologies, devices having a base station function may have different names. For example, in a 5th generation (5th generation, 5G) system, the device is referred to as a gNB; in an LTE system, the device is referred to as an evolved NodeB (evolved NodeB, eNB or eNodeB); and in a 3rd generation (3rd generation, 3G) system, the device is referred to as a NodeB (nodeB).

AMF network element: The AMF network element is a core network element, and is mainly responsible for signaling processing, for example, functions such as access control, mobility management, attachment and detachment, and gateway selection. When providing a service for a session in the terminal device, the AMF network element provides a control plane storage resource for the session, to store a session identifier, an SMF network element identifier associated with the session identifier, and the like.

Session management function (session management function, SMF) network element: The session management function network element is responsible for user plane network element selection, user plane network element redirection, internet protocol (internet protocol, IP) address assignment, bearer establishment, modification, and release, and QoS control.

UPF network element: The UPF network element is responsible for forwarding and receiving user data in the terminal device. The UPF network element may receive the user data from a data network, and transmit the user data to the terminal device by using the access network device. Alternatively, the UPF network element may receive the user data from the terminal device by using the access network device, and forward the user data to a data network. A transmission resource and a scheduling function in the UPF network element that provide a service for the terminal device are managed and controlled by the SMF network element.

Currently, the terminal device communicates with the untrusted non-3GPP access network device through an interface Y1, the untrusted non-3GPP access network device communicates with the N3IWF network element through an interface Y2, the N3IWF network element communicates with the AMF network element through an interface N2, and the AMF network element communicates with the AUSF network element through an interface N12 or a service-oriented interface. The terminal device communicates with the 3GPP access network device through an interface N1, the 3GPP access network device communicates with the AMF network element through an interface N2, the AMF network element communicates with the SMF network element through an interface N11, the SMF network element communicates with the UPF network element through an interface N4, the N3IWF network element communicates with the UPF network element through an interface N3, the 3GPP access network device communicates with the UPF network element through an interface N3, and the UPF network element communicates with the data network device through an interface N6.

It may be understood that in the communications system shown in FIG. 1, functions and interfaces of the network elements are merely examples. Not all functions are necessary when the network elements are applied to the embodiments of this application. All or some network elements in the core network in this embodiment may be physical entity network elements, or may be virtualized network elements. This is not limited herein.

The term "and/or" in the embodiments of this application describes only an association relationship for describing associated objects and represents that three relationships may exist. For example, A and/or B may represent the following cases: Only A exists, both A and B exist, and only B exists. In addition, in the descriptions of this application, "a plurality of' means two or more than two.

In the embodiments of this application, that a network element (for example, a network element A) obtains information from another network element (for example, a network element B) may mean that the network element A directly receives the information from the network element B, or may mean that the network element A receives the information from the network element B by using another network element (for example, a network element C). When the network element A receives information from the network element B by using the network element C, the network element C may transparently transmit the information, or may process the information, for example, add the information to different messages for transmission or filter the information, and send only filtered information to the network element A. Similarly, in the embodiments of this application, that the network element A sends information to the network element B may mean that the network element A directly sends the information to the network element B, or may mean that the network element A sends the information to the network element B by using another network element (for example, the network element C).

The following describes the technical solutions of this application by using several embodiments as examples. A same or similar concept or process may not be described in some embodiments.

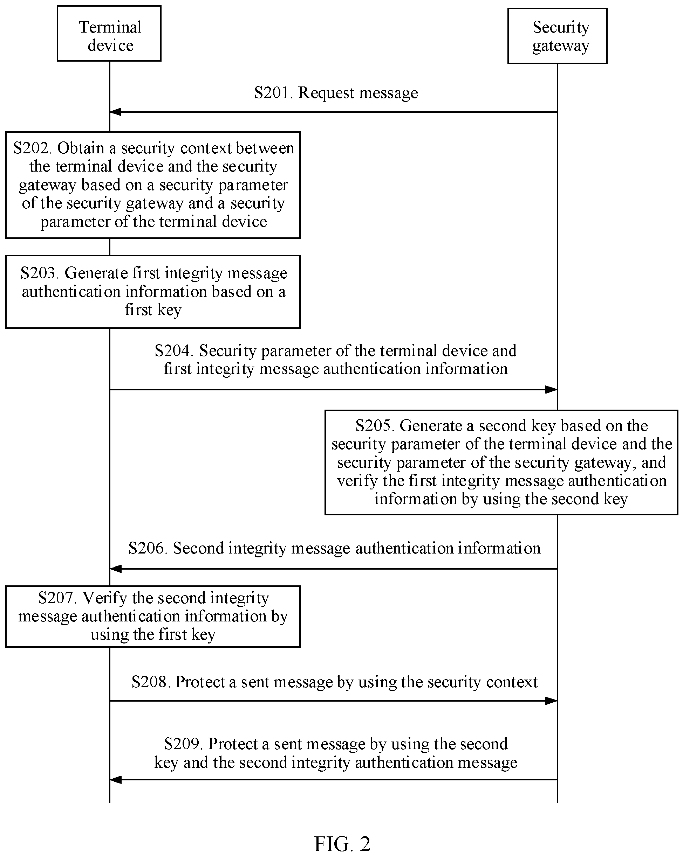

FIG. 2 is a schematic flowchart of a message sending method according to this application. As shown in FIG. 2, details are as follows:
S201. A security gateway sends a request message to a terminal device.

The request message includes a security parameter of the security gateway.

The security gateway is a device that can enable secure communication between a terminal device and a 3GPP core network by establishing a security tunnel, for example, the N3IWF network element shown in FIG. 1.

The security parameter of the security gateway includes but is not limited to a material used to generate a security context, for example, a to-be-negotiated algorithm or a selected algorithm, and a parameter required to generate the security context, for example, a security certificate, a public key sent by a security gateway in a Diffie-Hellman (Diffie-Hellman, DH) method, or a public key used by a gateway in a public and private key method.

The to-be-negotiated algorithm or the selected algorithm includes one or both of an integrity algorithm and an encryption algorithm.

The parameter required to generate the security context includes but is not limited to a DH value.

The request message may be any message before a non-access stratum (Non-access stratum, NAS) message is sent. The request message may be an extension of an existing request message, or may be a completely newly added request message. This is not limited in this application.

The request message may further include a security flag bit. The security flag bit is used to indicate that the request message is used to indicate a process of establishing the security context, or is used to instruct the terminal device to establish the security context. The security flag bit may be included in a header or a payload of the request message.

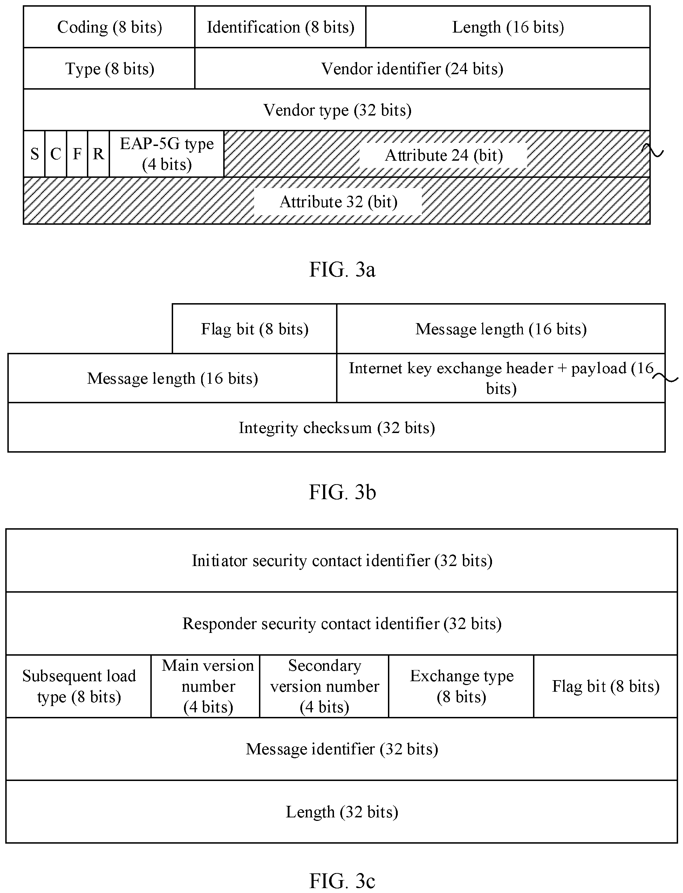

The security flag bit is included in the header of the request message, and the security flag bit may be represented by defining one or more bits in idle bits in the header. For example, a bit R in FIG. 3a may be replaced with the security flag bit. Alternatively, the security flag bit may be represented by redefining one or more bits that have been defined in the header. This is not limited in this application. For example, the request message is an extensible authentication protocol-5G (Extensible Authentication Protocol-5G, EAP-5G) message. A format of an EAP-5G packet header is shown in FIG. 3a to FIG. 3c. An internet key exchange version 2 (Internet Key Exchange version 2, IKEv2) is used as an example in FIG. 3a to FIG. 3c. FIG. 3a is a schematic diagram of an existing EAP-5G packet header. Slashed padding parts in FIG. 3a are extended into those shown in FIG. 3b, and a complete part of an internet key exchange header (IKE header, IKE HDR) part in FIG. 3b is shown in FIG. 3c. In FIG. 3a, S is a start flag bit; C is a complete flag bit; F is a failure flag bit; and R is a reserved flag bit.

The request message further includes a start flag bit; and the start flag bit is an existing flag in an existing packet header, and is represented by using one bit. When a value of the bit is valid, it indicates that the NAS message starts to be transmitted. To be specific, in this implementation, the security parameter is carried in an existing request message, so that the terminal device obtains the security parameter of the security gateway.

S202. The terminal device obtains a security context between the terminal device and the security gateway based on the security parameter of the security gateway and a security parameter of the terminal device.

The security parameter of the terminal device includes but is not limited to a material used to generate the security context, for example, a to-be-negotiated algorithm or a selected algorithm, and a parameter required to generate the security context, for example, a security certificate, a public key sent by a security gateway in a DH method, or a public key used by a gateway in a public and private key method.

The to-be-negotiated algorithm or the selected algorithm includes one or both of an integrity algorithm and an encryption algorithm.

The parameter required to generate the security context includes but is not limited to a DH value.

Optionally, the security context includes a first key. The terminal device may obtain the first key based on the security parameter of the security gateway and the security parameter of the terminal device. The first key includes an integrity protection key. Optionally, the first key further includes an encryption key.

S203. The terminal device generates first integrity message authentication information based on the first key.

The integrity message authentication information is generated by using a message to be replied by the terminal device and the integrity protection key. For example, the integrity authentication information may be a message authentication code for integrity (Message Authentication Code-Integrity, MAC-I), and is used to perform integrity protection and verification on a message sent by the terminal device to the security gateway in an authentication process.

Optionally, after generating the first integrity message authentication information, the terminal device may further perform S204.

S204. The terminal device sends the security parameter of the terminal device and the first integrity message authentication information to the security gateway.

The first integrity message authentication information is generated by using the integrity protection key generated by the terminal and a next message to be sent by the terminal device to the security gateway.

S205. The security gateway generates a second key based on the security parameter of the terminal device and the security parameter of the security gateway, and verifies the first integrity message authentication information by using the second key.

The second key includes an integrity protection key. Optionally, the second key further includes an encryption protection key. Further, whether the encryption protection key is included may be determined according to at least one of the following methods: a method of determining based on the security flag bit, a selected protection method, or a method of negotiation by both parties in advance. For example, the selected protection method is some specified public and private key methods.

If the first integrity message authentication information is successfully verified, it indicates that the first key is the same as the second key. In this case, the security gateway may perform, by using the second key, integrity protection or encryption protection on a message sent to the terminal device.

If the first integrity message authentication information fails to be verified, it indicates that the first key is different from the second key. In this case, the terminal device needs to be forbidden to access a core network, and optionally, authentication failure information may be returned.

S206. The security gateway sends second integrity message authentication information to the terminal device.

The security gateway generates the second integrity message authentication information based on the second key, and sends the second integrity message authentication information to the terminal device. The second integrity message authentication information is generated by using the second key generated by the security gateway and a next message to be sent to the terminal.

S207. The terminal device verifies the second integrity message authentication information by using the first key.

If the second integrity message authentication information is successfully verified, it indicates that the first key is the same as the second key. In this case, the terminal device may perform, by using the first key, security protection on a message sent to the security gateway. Security protection is integrity protection. Optionally, if an encryption key is generated, encryption protection is also performed.

If the second integrity message authentication information fails to be verified, it indicates that the first key is different from the second key. In this case, the terminal device needs to be forbidden to access a core network, and optionally, authentication failure information may be returned.

S208. The terminal device protects the sent message by using the security context.

A possible implementation is as follows:
The terminal device performs, by using the security context, integrity protection and/or encryption protection on the message sent to the security gateway.

For example, the sent message is a NAS message. For example, the NAS message is a NAS registration request message or a NAS authentication request message. This is not limited in this application. For another example, the sent message is a part or all of a message entity in an EAP-5G message. The message entity refers to a part other than EAP-5G header information.

S209. The security gateway protects the sent message by using the second key and the second integrity authentication message.

A possible implementation is as follows:
The security gateway performs, by using the security context, integrity protection on a message subsequently sent to the terminal device, and optionally performs encryption protection. The message subsequently sent by the security gateway to the terminal device includes all or some messages that are subsequently sent. For example, the security gateway protects a EAP-5G request (Request) message and a EAP 5G response (Response) message, but does not perform security protection on a EAP success (success) message or a EAP failure (failure) message.

A sequence of performing S208 and S209 is not limited.

In this embodiment, the security gateway sends the request message to the terminal device; the terminal device obtains the security context between the terminal device and the security gateway based on the security parameter of the security gateway and the security parameter of the terminal device; and the terminal device protects the sent message by using the security context, to improve security of the message sent by the terminal device to the security gateway. In addition, the terminal device sends the security parameter of the terminal device and the first integrity message authentication information to the security gateway; the security gateway generates the second key based on the security parameter of the terminal device and the security parameter of the security gateway, and verifies the first integrity message authentication information by using the second key; the security gateway sends the second integrity message authentication information to the terminal device; the terminal device verifies the second integrity message authentication information by using the first key; and the security gateway protects the sent message by using the security context, to improve security of the message sent by the security gateway to the terminal device.

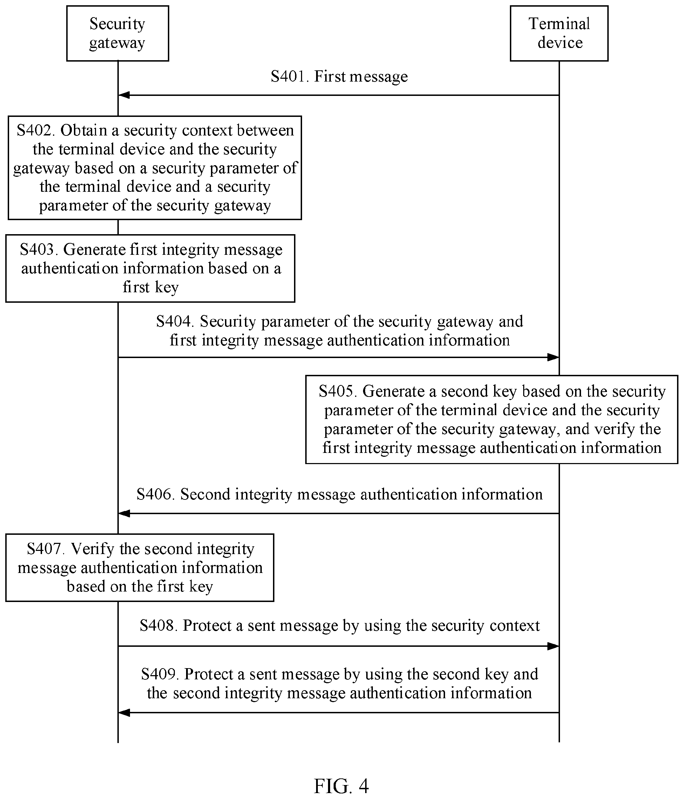

FIG. 4 is a schematic flowchart of another message sending method according to this application. As shown in FIG. 4, details are as follows:

S401. A terminal device sends a first message to a security gateway.

The first message includes an identity of the terminal device and a security parameter of the terminal device. The identity of the terminal device may be at least one of a device identifier, permanent identity information of the terminal device, and an encryption result of the permanent identity information of the terminal device.

The first message may be any message in a process of exchanging an identity between the terminal device and a non-3GPP access network device.

S402. The security gateway obtains a security context between the terminal device and the security gateway based on the security parameter of the terminal device and a security parameter of the security gateway.

The security gateway generates a first key based on the security parameter of the terminal device and the security parameter of the security gateway.

S403. The security gateway generates first integrity message authentication information based on the first key.

The integrity message authentication information is generated by using a message to be replied by the terminal device and an integrity protection key. For example, the integrity authentication information may be a message authentication code for integrity (MAC-I), and is used to perform integrity protection and verification on the message sent by the terminal device to the security gateway in an authentication process.

S404. The security gateway sends the security parameter of the security gateway and the first integrity message authentication information to the terminal device.

The first integrity message authentication information is generated by using an integrity protection key generated by the terminal and a next message to be sent by the terminal device to the security gateway.

S405. The terminal device generates a second key based on the security parameter of the terminal device and the security parameter of the security gateway, and verifies the first integrity message authentication information.

The second key includes an integrity protection key. Optionally, the second key further includes an encryption protection key. Further, whether the encryption protection key is included may be determined according to at least one of the following methods: a method of determining based on the security flag bit, a selected protection method, or a method of negotiation by both parties in advance. For example, the selected protection method is some specified public and private key methods.

If the first integrity message authentication information is successfully verified, it indicates that the first key is the same as the second key. In this case, the terminal device may perform, by using the second key, integrity protection or encryption protection on a message sent to the terminal device.

If the first integrity message authentication information fails to be verified, it indicates that the first key is different from the second key. In this case, the terminal device needs to be forbidden to access a core network, and optionally, authentication failure information may be returned.

S406. The terminal device sends second integrity message authentication information to the security gateway.

The terminal device generates the second integrity message authentication information based on the second key, and sends the second integrity message authentication information to the security gateway. The second integrity message authentication information is generated by using a second key generated by the security gateway and a next message to be sent to the terminal.

S407. The security gateway verifies the second integrity message authentication information based on the first key.

If the second integrity message authentication information is successfully verified, it indicates that the first key is the same as the second key. In this case, the security gateway may perform, by using the first key, security protection on a message sent to the terminal device. Security protection is integrity protection. Optionally, if an encryption key is generated, encryption protection is also performed.

If the second integrity message authentication information fails to be verified, it indicates that the first key is different from the second key. In this case, the terminal device needs to be forbidden to access a core network, and optionally, authentication failure information may be returned.

S408. The security gateway protects, by using the security context, the message sent to the terminal device.

The security gateway performs, by using the security context, integrity protection and/or encryption protection on the message sent to the terminal device.

S409. The terminal device protects, by using the security context, the message sent to the terminal device.

The terminal device performs, by using the security context, integrity protection on a message sent to the security gateway, and optionally performs encryption protection. The message subsequently sent by the terminal device to the security gateway includes all or some messages that are subsequently sent.

A sequence of performing S408 and S409 is not limited.

In this embodiment, the terminal device sends the first message to the security gateway; the security gateway obtains the security context between the terminal device and the security gateway based on the security parameter of the terminal device and the security parameter of the security gateway; the security gateway sends the security parameter of the security gateway and the first integrity message authentication information to the terminal device; the terminal device generates the second key based on the security parameter of the terminal device and the security parameter of the security gateway, and verifies the first integrity message authentication information; the terminal device sends the second integrity message authentication information to the security gateway; the security gateway verifies the second integrity message authentication information based on the first key; the security gateway protects, by using the security context, the message sent to the terminal device; and the terminal device protects, by using the security context, the message sent to the terminal device, to improve security of the sent message. In addition, the first message in this embodiment is any message in the process of exchanging the identity between the terminal device and the non-3GPP access network device. Therefore, a quantity of signaling interaction processes is reduced.

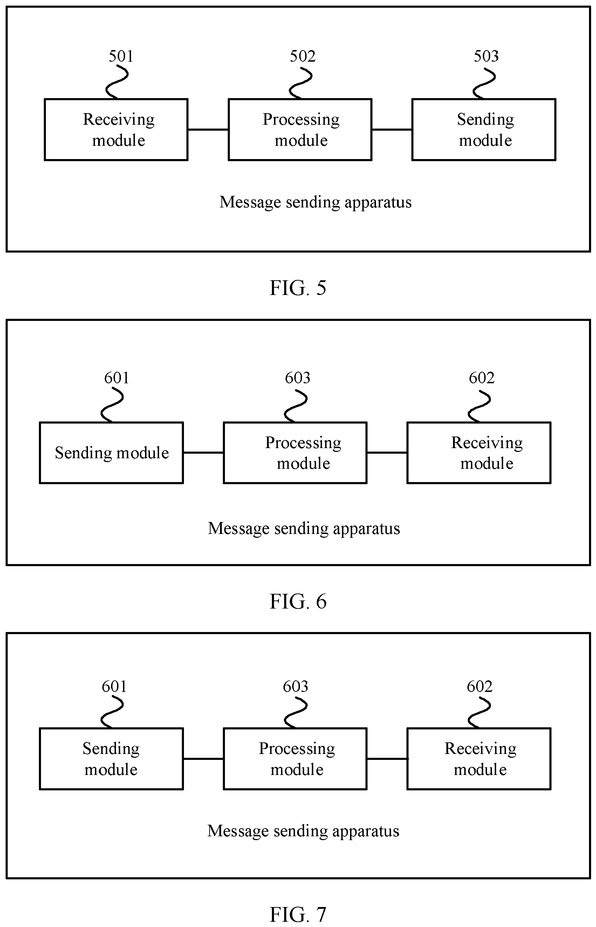

FIG. 5 is a schematic structural diagram of a message sending apparatus according to this application. The message sending apparatus may be a terminal device. The apparatus includes a receiving module 501, a processing module 502, and a sending module 503. The receiving module 501 is configured to receive a request message sent by a security gateway, where the request message includes a security parameter of the security gateway. The processing module 502 is configured to obtain a security context between the message sending apparatus and the security gateway based on the security parameter of the security gateway and a security parameter of the message sending apparatus. The sending module 503 is configured to protect a sent message by using the security context.

Optionally, the request message further includes a start flag bit.

Optionally, the request message further includes a security flag bit.

Optionally, the security flag bit is included in a header or a payload of the request message.

Optionally, the processing module 502 is specifically configured to: generate a first key based on the security parameter of the security gateway and the security parameter of the message sending apparatus; and generate first integrity message authentication information based on the first key.

Optionally, the sending module is further configured to send the security parameter of the message sending apparatus and the first integrity message authentication information to the security gateway.

Optionally, the receiving module 501 is further configured to receive second integrity message authentication information sent by the security gateway.

The processing module 502 is further configured to verify the second integrity authentication information based on the first key.

Optionally, the receiving module 501 is specifically configured to receive a response message sent by the security gateway, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the sending module 503 is specifically configured to: encrypt, by using the first key, the message sent to the security gateway; and perform, by using the first integrity message authentication information, integrity protection on the message sent to the security gateway.

The apparatus in this embodiment may be correspondingly configured to perform the technical solution in the method embodiment shown in FIG. 2. Implementation principles and technical effects of the apparatus and the method embodiment are similar. Details are not described herein again.

FIG. 6 is a schematic structural diagram of another message sending apparatus according to this application. The message sending apparatus may be a security gateway. The apparatus includes a sending module 601 and a receiving module 602. The sending module 601 is configured to send a request message to a terminal device, where the request message includes a security parameter of the message sending apparatus, and the security parameter of the message sending apparatus is used by the terminal device to obtain a security context between the terminal device and the message sending apparatus. The receiving module 602 is configured to receive a message sent by the terminal device, where the message is protected by using the security context between the terminal device and the security gateway.

Optionally, the request message further includes a start flag bit.

Optionally, the request message further includes a security flag bit.

Optionally, the security flag bit is included in a header or a payload of the request message.

Optionally, the security context includes a first key and first integrity message authentication information.

The receiving module 602 is further configured to receive a security parameter of the terminal device and the first integrity message authentication information that are sent by the terminal device.

The apparatus further includes a processing module 603.

The processing module 603 is configured to: generate a second key based on the security parameter of the terminal device and the security parameter of the message sending apparatus; and verify the first integrity message authentication information based on the second key.

Optionally, the sending module 601 is further configured to send second integrity message authentication information to the terminal device.

Optionally, the sending module 601 is further configured to send a response message to the terminal device, where the response message includes the second integrity message authentication information.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

Optionally, the sending module 601 is specifically configured to: encrypt, by using the second key, a message sent to the terminal device; and perform, by using the second integrity message authentication information, integrity protection on the message sent to the terminal device.

The apparatus in this embodiment may be correspondingly configured to perform the technical solution in the method embodiment shown in FIG. 2. Implementation principles and technical effects of the apparatus and the method embodiment are similar. Details are not described herein again.

FIG. 7 is a schematic structural diagram of still another message sending apparatus according to this application. The message sending apparatus may be a security gateway. The apparatus includes a receiving module 701, a processing module 702, and a sending module 703. The receiving module 701 is configured to receive a first message sent by a terminal device, where the first message includes an identity of the terminal device and a security parameter of the terminal device. The processing module 702 is configured to obtain a security context between the terminal device and the message sending apparatus based on the security parameter of the terminal device and a security parameter of the message sending apparatus. The sending module 703 is configured to protect, by using the security context, a message sent to the terminal device.

Optionally, the processing module 702 is specifically configured to: generate a first key based on the security parameter of the terminal device and the security parameter of the message sending apparatus; and generate first integrity message authentication information based on the first key.

Optionally, the sending module 703 is further configured to send the security parameter of the message sending apparatus and the first integrity message authentication information to the terminal device.

Optionally, the receiving module 701 is further configured to receive second integrity message authentication information sent by the terminal device.

The processing module 702 is further configured to verify the second integrity message authentication information based on the first key.

Optionally, the sending module 703 is specifically configured to: encrypt, by using the first key, the message sent to the terminal device; and perform, by using the first integrity message authentication information, integrity protection on the message sent to the terminal device.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

The apparatus in this embodiment may be correspondingly configured to perform the technical solution in the method embodiment shown in FIG. 4. Implementation principles and technical effects of the apparatus and the method embodiment are similar. Details are not described herein again.

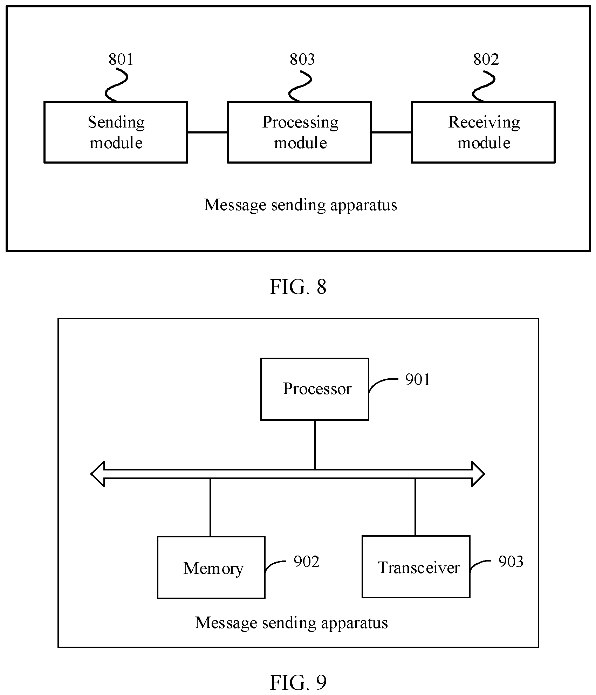

FIG. 8 is a schematic structural diagram of yet another message sending apparatus according to this application. The message sending apparatus may be a terminal device. The apparatus includes a sending module 801 and a receiving module 802. The sending module 801 is configured to send a first message to a security gateway, where the first message includes an identity of the message sending apparatus and a security parameter of the message sending apparatus, and the security parameter is used by the security gateway to obtain a security context between the message sending apparatus and the security gateway. The receiving module 802 is configured to receive a message sent by the security gateway, where the message is protected by using the security context between the message sending apparatus and the security gateway.

Optionally, the security context includes a first key and first integrity message authentication information.

The receiving module is further configured to receive a security parameter of the security gateway and the first integrity message authentication information that are sent by the security gateway.

The apparatus further includes:
a processing module 803, configured to: generate a second key based on the security parameter of the message sending apparatus and the security parameter of the security gateway; and verify the first integrity message based on the second key.

Optionally, the sending module 801 is further configured to send second integrity message authentication information to the security gateway.

Optionally, the sending module 801 is further configured to: encrypt, by using the security context, the message sent to the network device; and perform, by using the second integrity message authentication information, integrity protection on the message sent to the network device.

Optionally, the security parameter includes a parameter required to generate the security context.

Optionally, the parameter required to generate the security context includes a negotiated algorithm, and the negotiated algorithm includes one or both of an integrity algorithm and an encryption algorithm.

The apparatus in this embodiment may be correspondingly configured to perform the technical solution in the method embodiment shown in FIG. 4. Implementation principles and technical effects of the apparatus and the method embodiment are similar. Details are not described herein again.

FIG. 9 is a schematic structural diagram of yet another message sending apparatus according to this application. The message sending apparatus may be a terminal device. The apparatus includes a processor 901, a memory 902, and a transceiver 903. The memory 902 is configured to store an instruction, the transceiver 903 is configured to communicate with another device, and the processor 901 is configured to execute the instruction stored in the memory 902, so that a security gateway performs the technical solution in the method embodiment shown in FIG. 2.

The apparatus in this embodiment may be correspondingly configured to perform the technical solution in the method embodiment shown in FIG. 2. Implementation principles and technical effects of the apparatus and the method embodiment are similar. Details are not described herein again.

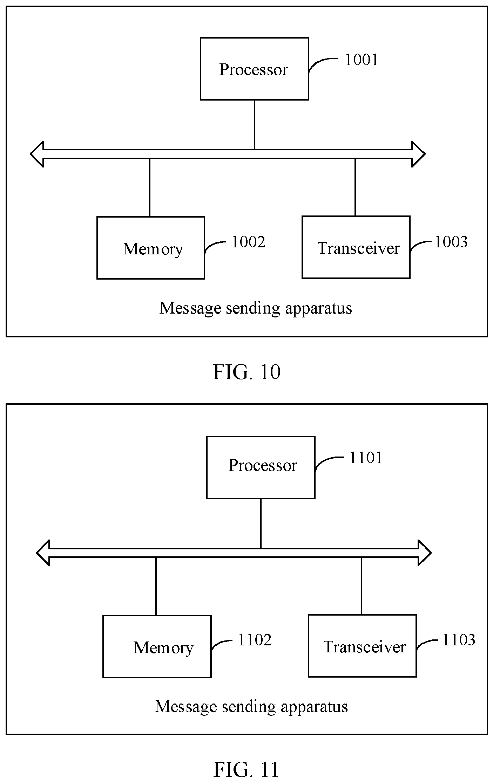

FIG. 10 is a schematic structural diagram of yet another message sending apparatus according to this application. The message sending apparatus may be a security gateway. The apparatus includes a processor 1001, a memory 1002, and a transceiver 1003. The memory 1002 is configured to store an instruction, the transceiver 1003 is configured to communicate with another device, and the processor 1001 is configured to execute the instruction stored in the memory 1002, so that the security gateway performs the technical solution in the method embodiment shown in FIG. 2.

FIG. 11 is a schematic structural diagram of yet another message sending apparatus according to this application. The message sending apparatus may be a security gateway. The apparatus includes a processor 1101, a memory 1102, and a transceiver 1103. The memory 1102 is configured to store an instruction, the transceiver 1103 is configured to communicate with another device, and the processor 1101 is configured to execute the instruction stored in the memory 1102, so that the security gateway performs the technical solution in the method embodiment shown in FIG. 4.

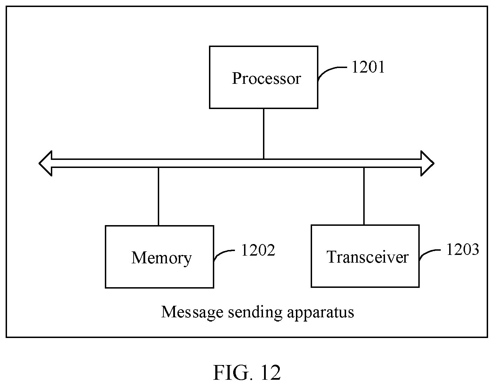

FIG. 12 is a schematic structural diagram of yet another message sending apparatus according to this application. The message sending apparatus may be a terminal device. The apparatus includes a processor 1201, a memory 1202, and a transceiver 1203. The memory 1202 is configured to store an instruction, the transceiver 1203 is configured to communicate with another device, and the processor 1201 is configured to execute the instruction stored in the memory 1202, so that a security gateway performs the technical solution in the method embodiment shown in FIG. 4.

This application further provides a computer readable storage medium, applied to a message sending apparatus. The computer readable storage medium stores an instruction, and when the instruction is executed by a computing apparatus, the message sending apparatus is enabled to perform the method in FIG. 2.

This application further provides a computer readable storage medium, applied to a message sending apparatus. The computer readable storage medium stores an instruction, and when the instruction is executed by a computing apparatus, the message sending apparatus is enabled to perform the method in FIG. 4.

This application further provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method in FIG. 2.

This application further provides a program product. The program product includes a computer program, the computer program is stored in a computer readable storage medium, at least one processor of a message sending apparatus reads the computer program from the computer readable storage medium, and the at least one processor executes the computer program, so that the message sending apparatus performs the method in FIG. 4.

In the embodiments of this application, a sending module and a receiving module are configured to implement content interaction between a processing module and another unit or network element. Specifically, the sending module and the receiving module may be a communications interface, or a transceiver circuit or a transceiver, or a transceiver. Alternatively, the sending module and the receiving module may be a communications interface or a transceiver circuit of the processing module.

The processing module is configured to process data. The processing module may be a processing circuit, or may be a processor. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof.

Alternatively, the processing module may include a plurality of processing units, or the processing unit includes a plurality of sub-data processing units. Specifically, the processor may be a single-core (single-CPU) processor, or may be a multi-core (multi-CPU) processor.

The message sending apparatus in the embodiments may further include a storage unit. The storage module is configured to store a computer instruction executed by the processing module. The storage module may be a storage circuit or a memory. The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. The storage module may be a unit independent of the processing module, or may be a storage unit in the processing module. This is not limited herein. The message sending apparatus may include a plurality of storage modules, or the storage module includes a plurality of sub-storage modules.

The sending module, the receiving module, and the processing module may be physically separated units, or may be integrated into one or more physical units. This is not limited herein.

In the several embodiments provided in this application, it should be understood that the disclosed apparatus and method may be implemented in another manner. For example, the foregoing described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of hardware and a software function unit.

## Claims

1. A message sending method, comprising:
receiving, by a terminal device, a request message sent by a security gateway, wherein the request message comprises a security parameter of the security gateway;
obtaining, by the terminal device, a security context between the terminal device and the security gateway based on the security parameter of the security gateway and a security parameter of the terminal device; and
protecting, by the terminal device, a sent message by using the security context.

2. The method according to claim 1, wherein the request message further comprises a start flag bit.

3. The method according to claim 1, wherein the request message further comprises a security flag bit.

4. The method according to claim 3, wherein the security flag bit is comprised in a header or a payload of the request message.

5. The method according to any one of claims 1 to 4, wherein the obtaining, by the terminal device, a security context between the terminal device and the security gateway based on the security parameter of the security gateway and a security parameter of the terminal device comprises:
generating, by the terminal device, a first key based on the security parameter of the security gateway and the security parameter of the terminal device; and
generating, by the terminal device, first integrity message authentication information based on the first key.

6. The method according to claim 5, further comprising:
sending, by the terminal device, the security parameter of the terminal device and the first integrity message authentication information to the security gateway.

7. The method according to claim 6, further comprising:
receiving, by the terminal device, second integrity message authentication information sent by the security gateway; and
verifying, by the terminal device, the second integrity authentication information based on the first key.

8. The method according to claim 7, wherein the receiving, by the terminal device, second integrity message authentication information sent by the security gateway comprises:
receiving, by the terminal device, a response message sent by the security gateway, wherein the response message comprises the second integrity message authentication information.

9. The method according to any one of claims 1 to 8, wherein
the security parameter comprises a parameter required to generate the security context.

10. The method according to claim 9, wherein
the parameter required to generate the security context comprises a negotiated algorithm; and
the negotiated algorithm comprises one or both of an integrity algorithm and an encryption algorithm.

11. The method according to claim 5, wherein the protecting, by the terminal device, a sent message by using the security context comprises:
encrypting, by the terminal device by using the first key, the message sent to the security gateway; and
performing, by the terminal device by using the first integrity message authentication information, integrity protection on the message sent to the security gateway.

12. A message sending method, comprising:
sending, by a security gateway, a request message to a terminal device, wherein the request message comprises a security parameter of the security gateway, and the security parameter of the security gateway is used by the terminal device to obtain a security context between the terminal device and the security gateway; and
receiving, by the security gateway, a message sent by the terminal device, wherein the message is protected by using the security context between the terminal device and the security gateway.

13. The method according to claim 12, wherein the security context comprises a first key and first integrity message authentication information; and
the method further comprises:
receiving, by the security gateway, a security parameter of the terminal device and the first integrity message authentication information that are sent by the terminal device;
generating, by the security gateway, a second key based on the security parameter of the terminal device and the security parameter of the security gateway; and
verifying, by the security gateway, the first integrity message authentication information based on the second key.

14. The method according to claim 13, further comprising:
sending, by the security gateway, second integrity message authentication information to the terminal device.

15. The method according to claim 14, wherein the sending, by the security gateway, second integrity message authentication information to the terminal device comprises:
sending, by the security gateway, a response message to the terminal device, wherein the response message comprises the second integrity message authentication information.

16. The method according to any one of claims 12 to 15, wherein
the security parameter comprises a parameter required to generate the security context.

17. The method according to claim 16, further comprising:
encrypting, by the security gateway by using the second key, a message sent to the terminal device; and
performing, by the security gateway by using the second integrity message authentication information, integrity protection on the message sent to the terminal device.

18. A message sending apparatus, comprising:
a receiving module, configured to receive a request message sent by a security gateway, wherein the request message comprises a security parameter of the security gateway;
a processing module, configured to obtain a security context between the message sending apparatus and the security gateway based on the security parameter of the security gateway and a security parameter of the message sending apparatus; and
a sending module, configured to protect a sent message by using the security context.

19. The apparatus according to claim 18, wherein the processing module is specifically configured to: generate a first key based on the security parameter of the security gateway and the security parameter of the message sending apparatus; and generate first integrity message authentication information based on the first key.

20. The apparatus according to claim 19, wherein the sending module is further configured to send the security parameter of the message sending apparatus and the first integrity message authentication information to the security gateway.

21. The apparatus according to claim 20, wherein the receiving module is further configured to receive second integrity message authentication information sent by the security gateway; and
the processing module is further configured to verify the second integrity authentication information based on the first key.

22. The apparatus according to any one of claims 18 to 21, wherein
the sending module is specifically configured to: encrypt, by using the first key, the message sent to the security gateway; and perform, by using the first integrity message authentication information, integrity protection on the message sent to the security gateway.

23. A message sending apparatus, comprising:
a sending module, configured to send a request message to a terminal device, wherein the request message comprises a security parameter of the message sending apparatus, and the security parameter of the message sending apparatus is used by the terminal device to obtain a security context between the terminal device and the message sending apparatus; and
a receiving module, configured to receive a message sent by the terminal device, wherein the message is protected by using the security context between the terminal device and the message sending apparatus.

24. The apparatus according to claim 23, wherein the security context comprises a first key and first integrity message authentication information;
the receiving module is further configured to receive a security parameter of the terminal device and the first integrity message authentication information that are sent by the terminal device; and
the apparatus further comprises a processing module, wherein
the processing module is configured to: generate a second key based on the security parameter of the terminal device and the security parameter of the message sending apparatus; and verify the first integrity message authentication information based on the second key.

25. The apparatus according to claim 24, wherein
the sending module is further configured to send second integrity message authentication information to the terminal device.

26. The apparatus according to claim 25, wherein
the sending module is specifically configured to: encrypt, by using the second key, a message sent to the terminal device; and perform, by using the second integrity message authentication information, integrity protection on the message sent to the terminal device.

27. A message sending apparatus, comprising:
a processor, a memory, and a transceiver, wherein the memory is configured to store an instruction, the transceiver is configured to communicate with another device, and the processor is configured to execute the instruction stored in the memory, so that the message sending apparatus performs the method according to any one of claims 1 to 11.

28. A message sending apparatus, comprising:
a processor, a memory, and a transceiver, wherein the memory is configured to store an instruction, the transceiver is configured to communicate with another device, and the processor is configured to execute the instruction stored in the memory, so that the message sending apparatus performs the method according to any one of claims 12 to 17.

29. A computer readable storage medium, wherein the computer readable storage medium stores an instruction, and when the instruction is executed by a computing apparatus, a message sending apparatus is enabled to perform the method according to any one of claims 1 to 11.

30. A computer readable storage medium, wherein the computer readable storage medium stores an instruction, and when the instruction is executed by a computing apparatus, a message sending apparatus is enabled to perform the method according to any one of claims 12 to 17.
